# EUROPEAN PATENT APPLICATION

(11) **EP 4 763 517 A1**
(43) Date of publication of application: **24.06.2026**
(21) Application number: 24383392.8
(22) Date of filing: 18.12.2024
(51) Int. Cl.: B32B 37/15, B32B 38/10

(54) **PROCESS TO MAKE COATED PAPER**

(71) Applicant: Dow Global Technologies LLC, Midland, MI 48674 (US)
(72) Inventor: HELGERT, Anna, 43006 Tarragona (ES); SAHU, Nrusingh, 43006 Tarragona (ES)
(74) Representative: Boult Wade Tennant LLP

(57) **Abstract**

A laminate contains (i) a first substrate, (ii) a first release polymer layer adhered directly or indirectly to the first substrate, (iii) a second release polymer layer directly in contact with the first release polymer layer, and (iv) optionally a second substrate adhered directly or indirectly to the second release polymer layer. The first and second release polymer layers have release with respect to each other. The laminate may be separated at the interface between the first and second release polymer layer to make two product sheets.

## Description

### FIELD

Embodiments described herein generally relate to the field of polymer coated substrates and processes to make them.

### INTRODUCTION

Polymer coatings are added to many substrates by extrusion coating for many different reasons. Polymer coatings extruded onto paper, metal foil or even other polymers can provide a good surface for heat sealing or for printing. In addition, polymer coatings extruded onto paper substrates (such as coated paper, paperboard and cardboard) can give the paper substrate increased tear resistance, scuff resistance, chemical resistance, grease resistance, and a good barrier against water and various gases. Coated paper substrates are widely used in milk and juice cartons, in food packaging and in other consumer and industrial applications. Coated metal foils are also widely used in food packaging.

Extrusion coating processes generally use the steps of:
1. extruding a molten polymer film;
2. drawing the molten polymer film across an air gap;
3. contacting the polymer film with a substrate;
4. pressing polymer film and the substrate together with sufficient force and cooling so that the polymer film adheres to the substrate to create a laminate of polymer film and the substrate; and
5. optionally trimming the edges of the laminate to remove areas that have little or uneven film.

The pressure in step 4 is commonly applied by pressing the coated substrate between a chill roll and a pressure roll. The chill roll removes heat from the molten polymer to solidify it. The pressure roll maintains even pressure on the coated substrate against the chill roll to provide an even coating.

Makers and users of coated paper, foil and other substrates may seek to reduce the thickness of the polymer film coating, both to reduce the cost of polymer and to reduce the quantity of polymer in waste streams. However, it is technically difficult to make coatings that are both thin and even. Friction with the extrusion die pulls on the polymer film as it is extruded, and a thin film has less material to resist the pulling. As a result, thin film coatings are susceptible to flaws such as bare spots that have no coating, tears in the coating, orange peel appearance and spots where the coating is too thin to effectively perform its purpose.

These problems can be reduced by slowing the speed of the production line, but slow line speeds are inefficient.

New processes are needed that can put even layers of thin polymer film on substrates at normal line speeds.

### SUMMARY

Disclosed herein is a process to make a polymer-coated substrate. The process comprises the steps of:
(a) forming a laminate that comprises:
   (i) a first substrate
   (ii) a first release polymer layer adhered directly or indirectly to the first substrate;
   (iii) a second release polymer layer directly in contact with the first release polymer layer; and
   (iv) optionally a second substrate adhered directly or indirectly to the second release polymer layer on the face of the laminate opposite the first substrate; and
(b) separating the laminate at the interface between the first and second release polymer layers, such that the first release polymer layer remains adhered directly or indirectly to the first substrate and the second release polymer layer is removed.

The first release polymer layer is an internal layer of the laminate, which is protected and supported by other layers on each side, so it can be extruded and applied as a thin layer at normal speeds without significant risk of damage. After the laminate is separated in step (b), the first release polymer layer remains adhered directly or indirectly to the first substrate as a coating. Together, the first substrate, the first release polymer layer and any supplemental layers between them make up a first product sheet. In some embodiments, the second release polymer layer, optionally with a second substrate and/or supplemental layer, are recovered and make up a second product sheet.

### BRIEF DESCRIPTION OF THE DRAWINGS

Figure 1 illustrates a laminate that comprises (i) a first substrate; and (ii) a first release polymer layer adhered to the first substrate and (iii) a second release polymer layer adhered to the first release polymer layer.
Figure 2 illustrates the laminate of Figure 1, in which the second release polymer layer is being separated from the first release polymer layer to yield (a) a first product sheet comprising the first substrate coated by the first release polymer layer; and (b) a second product sheet comprising the second release polymer layer.
Figure 3 illustrates a laminate that comprises (i) a first substrate, (ii) a first release polymer layer adhered to the first layer of substrate, (iii) a second release polymer layer adhered to the first release polymer layer, and (iv) a second substrate adhered to the second release polymer layer.
Figure 4 illustrates the laminate of Figure 3, in which the second release polymer layer is being separated from the first release polymer layer to yield (a) a first product sheet comprising the first substrate coated with the first release polymer layer and (b) a second product sheet comprising the second substrate coated with the second release polymer layer.
Figure 5 illustrates an embodiment of the step of separating the laminate.

### DETAILED DESCRIPTION

### Definitions:

"Directly adhered" means, with respect to layers in a laminate or product sheet, that a face of one layer adheres directly to a face of another layer, without a tie layer or other layer between them, with an adhesion strength such that the two layers cannot be physically separated, such as by peeling apart, to form two separate continuous films without tearing.

"Directly in contact" means, with respect to layers in a laminate or product sheet, that a face of one layer is in contact with a face of another layer, without a tie layer or other layer between them that would adhere them together.

"Draw Down Ratio" means the ratio of the die gap at which the source film is extruded, in microns, divided by the average thickness of the resulting coating, in microns.

"High Density Polyethylene" (HDPE) means a substantially linear, or linear, polyethylene homopolymer or ethylene/α-olefin interpolymer which (i) comprises units derived from ethylene and optionally units derived from at least one C₃-C₁₀ α-olefin comonomer; and (ii) has a density from 0.940 g/cm³ to 0.980 g/cm³. Non-limiting examples of HDPE are sold under the DOW^{™} trademark.

"Indirectly adhered" means, with respect to layers in a laminate, that two layers of a laminate are adhered to each other by one or more intervening polymer layers with an adhesion strength such that the two layers cannot be physically separated, such as by peeling apart, to form two separate continuous films without tearing.

"Laminate" means a multi-layer structure that comprises (i) a first substrate, (ii) a first release polymer layer adhered directly or indirectly to the first substrate, (iii) a second release polymer layer directly in contact with the first release polymer layer, and (iv) optionally a second paper substrate adhered directly or indirectly to the second law adhesion polymer layer.

"Linear Low Density Polyethylene" (LLDPE) means a substantially linear, or linear, ethylene/α-olefin interpolymer containing homogeneous short-chain branching distribution which (i) comprises units derived from ethylene and units derived from at least one C₃-C₁₀ α-olefin comonomer; and (ii) has a density from 0.910 g/cm³ to 0.940 g/cm³. Non-limiting examples of LLDPE are sold under the DOWLEX^{™} and ELITE^{™} trademarks.

"Low Density Polyethylene" (LDPE) means a branched polyethylene homopolymer or ethylene/α-olefin interpolymer which (i) comprises units derived from ethylene and optionally units derived from at least one C₃-C₁₀ α-olefin comonomer; and (ii) has a density from 0.910 g/cm³ to 0.950 g/cm³. Non-limiting examples of HDPE are sold under the DOW^{™} trademark.

"Product Sheet" means a sheet or film made by separation of a laminate in step (b) of the process in this invention. In some embodiments, a product sheet may be more than 0.25 mm thick, so that it fits the common definition of a sheet. In some embodiments, a product sheet may be less than 0.25 mm thick, so that it fits the common definition of a film.

"Release Polymer Layers" are layers of polymer in a laminate that are directly in contact with each other and that have low-adhesion with each other. "Low-adhesion" means that the release polymer layers can be physically separated, such as by peeling apart, to form two separate continuous films without tearing.

"Source Film" means a multilayer polymer film that comprises at least two release polymer layers that are directly in contact with each other.

"Supplemental Layers" mean polymer layers in a laminate or a product sheet other than the substrate and the release polymer layers.

### Description

In this process, a laminate is formed that comprises (i) a first substrate, (ii) a first release polymer layer adhered directly or indirectly to the substrate, (iii) a second release polymer layer directly in contact with the first release polymer layer, and (iv) optionally a second substrate adhered directly or indirectly to the second law adhesion polymer layer.

The laminate is separated at the interface between the release polymer layers as described in step (b) to form a first product sheet. The first product sheet comprises the first substrate and the first release polymer layer as a surface coating on the first substrate. Any supplemental polymer layers that were between the first substrate and the first release polymer layer in the laminate remain in place between the first substrate and the first release polymer layer in the first product sheet.

In some embodiments, the second release polymer layer and any other layers that were adhered to the second release polymer layer in the laminate are recovered as a second product sheet after step (b) (the separation step).

In some embodiments, the second release polymer layer is not adhered to any other layer in the laminate. After step (b), the second release polymer layer forms a second product sheet that is a monolayer polymer film or sheet.

In some embodiments, the second release polymer layer is adhered directly or indirectly to a second substrate. After step (b), the second product sheet comprises the second substrate and the second release polymer layer adhered directly or indirectly as a surface coating on the second substrate. Any supplemental layers that were between the second substrate and the second release polymer layer in the laminate remain in place between the second substrate and the second release polymer layer in the second product sheet\.

In some embodiments, the second release polymer layer is adhered directly or indirectly to one or more polymer layers in the laminate without a second substrate. After step (b), the second product sheet comprises a multilayer polymer film or sheet with the second release polymer on one surface.

The substrate(s) and polymer layers in the laminate are selected to provide the desired first and second product sheets. The laminate contains at least two polymer layers: the first and second release polymer layers. In some embodiments, the laminate comprises at least 3 polymer layers or at least 4 polymer layers or at least 5 polymer layers or at least 7 polymer layers. There is no maximum limit on the layers that the laminate can have, but in some embodiments, for purposes of efficiency and simplicity, the laminate comprises no more than 15 layers or no more than 12 layers or no more than 10 layers or no more than 8 layers or no more than 6 layers or no more than 4 layers or no more than 3 layers or no more than 2 layers. Polymer layers other than the substrate(s) and the release polymer layers are called supplemental layers.

### Substrates

Laminates in the process contain a first substrate and optionally a second substrate. Each substrate is a sheet of material that may be coated with a multilayer polymer film using an extrusion coating process. In some embodiments, each substrate independently comprises a paper substrate or a metal sheet or foil or a woven or non-woven cloth or a polymer sheet such as biaxially oriented polyethylene terephthalate.

In some embodiments, the substrate has a thickness of at least 5 microns or at least 10 microns or at least 20 microns or at least 30 microns or at least 40 microns or at least 50 microns or at least 60 microns or at least 70 microns or at least 80 microns or at least 90 microns or at least 100 microns. In some embodiments, the substrate has a thickness of at most 1000 microns or at most 900 microns or at most 800 microns or at most 700 microns or at most 600 microns or at most 500 microns or at most 400 microns or at most 300 microns or at most 200 microns or at most 100 microns. Desirable thickness may vary depending on the material of the substrate and the intended use of the product films.

In some embodiments, the first and/or the second substrate is a paper substrate. Examples of paper substrates include sheets and rolls of paper, paperboard and cardboard. The thickness and weight of the paper substrate may vary widely depending on its intended use. Under ISO standards, paper is a single layer structure whose weight is no more than 200 grams per square meter (gsm), although different organizations set the dividing line from 160 gsm to 220 gsm. Some papers are as light as 90 gsm or less. Paperboard is typically considered to be a single layer structure whose weight is above the weight for paper, such as from 200 gsm to 500 gsm. Cardboard is typically considered to be a multilayer structure, such as corrugated cardboard, which has two paperboard face sheets enclosing a three dimensional paperboard wave structure. Cardboard with weights from 200 gsm to 1000 gsm are common, although heavier weights can also be made. As a result, some embodiments may use a paper substrate with a weight of at least 90 gsm, and some embodiments may use a paper substrate with a weight of up to 1000 gsm.

In some embodiments, paper has a thickness of from 75 microns to 200 microns. In some embodiments, paperboard has a thickness from 200 microns to 400 microns. The thickness of multilayer cardboard varies widely; some examples are as low as 250 microns, and some examples are 1 cm or thicker. As a result, some embodiments may use a paper substrate with a thickness of at least 75 microns or at least 90 microns or at least 100 microns, and some embodiments may use a paper substrate with a thickness of at most 1 cm or at most 1 mm or at most 500 microns or at most 400 microns or at most 200 microns.

In some embodiments, a primer is applied to the paper substrate to improve the adhesion of polymers to the paper surface. Examples of primers include organic titanate, urethane primers, polyvinylidene chloride primers and ethylene acrylic acid primers. In some embodiments, the paper substrate is flame treated or corona treated to improve adhesion of polymers to the paper surface. Primers on the paper are not considered supplemental polymer layers.

In some embodiments, the first and/or the second substrate comprises a metal sheet or foil. In some embodiments, the metal sheet or foil comprises aluminum, brass, copper, steel, stainless steel, nickel or gold. In some embodiments, the metal sheet or foil comprises aluminum.

In some embodiments, the metal sheet or foil has an average thickness of less than 0.2 mm (200 microns), which is considered a foil. In some embodiments, the metal sheet or foil has a thickness of at least 5 microns or at least 10 microns or at least 12 microns or at least 15 microns or at least 20 microns or at least 25 microns. In some embodiments, the metal sheet or foil has a thickness of at most 150 microns or at most 100 microns or at most 75 microns or at most 50 microns or at most 25 microns. In some embodiments, the metal sheet or foil has an average thickness of at least 0.2 mm (200 microns) and is considered a sheet. In some embodiments. The metal sheet has a thickness of no more than 1000 microns or no more than 500 microns or no more than 300 microns.

Extrusion coating of polymer films onto metal substrates is commonly known and practiced. It is known that some polymers adhere poorly to metal sheets and foils. In some embodiments, when a substrate is a metal sheet or foil, the substrate is coated with a coating to improve adhesion. In some embodiments, when a substrate is a metal sheet or foil, the source film is extruded with an adhesive (tie) layer on one face that can adhere to the metal substrate.

In some embodiments, the substrate may comprise a woven or nonwoven fabric, such as nylon, polyester or natural fibers. In some embodiments, a fabric substrate has a thickness of at least 20 microns and at most 100 microns.

In some embodiments, the substrate comprises a polymer sheet. In some embodiments, the polymer sheet comprises polyethylene terephthalate, polyamide (nylon), polypropylene or polyethylene.. In some embodiments, the polymer sheet comprises biaxially-oriented polymer, such as biaxially-oriented polyethylene terephthalate (BOPET) or biaxially-oriented nylon (BOPA). In some embodiments, the polymer sheet comprises cast polypropylene (CPP). In some embodiments, the polymer substrate has a thickness of at least 5 microns or at least 10 microns or at least 20 microns. In some embodiments, the polymer substrate has a thickness of at most 200 microns or at most 150 microns or at most 100 microns.

Some release polymer layers may adhere poorly to some polymer substrates. In some embodiments, when a substrate is a polymer, the source film is extruded with a tie layer on one face that can adhere to the polymer substrate.

### Release Polymer Layers

Many different polymers may be useful in release polymer layers, but the first release polymer layer and the second release polymer layer must comprise different polymers that have low adhesion with respect to each other, so that the laminate may be separated to form two different product sheets without tearing. Examples of polymers that may be used in the release polymer layers include polyethylene (PE), polypropylene (PP), polyethylene terephthalate (PET) such as Mylar, polystyrene (PS and high impact polystyrene, HIPS), polyvinyl chloride (PVC), polyvinylidene chloride (PVDC), polyamides (PA) including nylons, ethylene vinyl alcohol (EVOH), ethylene-vinyl acetate (EVA), acrylic acid copolymers, acrylate copolymers, and ionomers. Polyethylene may include HDPE, LLDPE, LDPE and polyethylene plastomers or elastomers.

It is known in polymer film arts which layers of polymers adhere well to each other and which layers do not. Commonly, manufacturers add a tie layer between release polymer layers, but in this invention the first and second release polymer layers do not have a tie layer between them. Pairs of polymers that are commonly joined by tie layers in multilayer films may be release polymer layers in this invention.

In some embodiments, one release polymer layer comprises polyethylene, and the other release polymer layer comprises polypropylene. Certain polyethylenes adhere poorly to certain polypropylenes. For example, polypropylene homopolymers and polypropylene copolymers that comprise lower levels of ethylene may have lower adhesion to polyethylene. Certain extrusion, stretching and winding conditions can increase or decrease adhesion between polyethylene and polypropylene layers in multilayer films. Faster cooling, higher draw ratio and varying flow rate between the polyethylene and polypropylene layers can increase adhesion between the polyethylene and polypropylene layers, and so in some embodiments these conditions are avoided.

In some embodiments, one release polymer layer comprises polyolefin and the other release polymer layer comprises a non-polyolefin polymer having regular dipolar moieties, such as hydroxyl, halide, acid, acid salt, ester, amine or amide moieties.

In some embodiments, a polyolefin release polymer layer comprises primarily polypropylene. In some embodiments, a polyolefin release polymer layer comprises primarily polyethylene. In some embodiments, a polyolefin release polymer layer comprises primarily high density polyethylene. In some embodiments, a polyolefin release polymer layer comprises primarily low density polyethylene. In some embodiments, a polyolefin release polymer layer comprises primarily linear low density polyethylene. In some embodiments, a release polymer layer comprises primarily polyethylene plastomers or elastomers. Suitable polyolefins are commercially available, such as under the DOW^{™}, DOWLEX^{™}, UNIPOL^{™}, CEFOR^{™}, ATTANE^{™} and ELITE^{™} trademarks. Others can be made by known processes, such as polymerization of ethylene and/or propylene, optionally with α-olefin comonomers such as 1-butene, 1-hexene or 1-octene, in the presence of a catalysts such as a Ziegler-Natta catalyst of a metallocene catalyst. In some embodiments, a polyolefin release polymer layer comprises primarily polypropylene.

In some embodiments, a non-polyolefin release polymer layer comprises primarily EVOH. In some embodiments, a non-polyolefin release polymer layer comprises primarily nylon. In some embodiments, a non-polyolefin release polymer layer comprises primarily polyvinylidene chloride. In some embodiments, the non-polyolefin release polymer layer comprises primarily polyester such as PET.

In some embodiments, a non-polyolefin release polymer layer comprises an ionomer. Examples of ionomers include polymers having pendant carboxylic acid moieties, such as ethylene acrylic acid copolymers, in which pendant carboxylic acid moieties have been converted to acid salts by contact with an aqueous metal hydroxide. In some embodiments, the counter-ions in the ionomer are selected from the group consisting of sodium, potassium, magnesium, lithium or zinc cations.

Suitable non-polyolefin polymers for the non-polyolefin release polymer layer are commercially available, such as under the SURLYN^{™}, Eval, Soarnol, Ultramid, Technylstar, Mylar and SARAN^{™} trademarks. Others can be made by known processes.

In some embodiments, one or both release polymer layers consist essentially of a single polymer. In some embodiments, one or both release polymer layers comprise a blend of two or more polymers. It is known to blend compatible polymers or to add a compatibilizer to blend incompatible polymers. Suitable compatibilizers are commercially available.

In some embodiments, the adhesive strength between the release polymer layers is lower than the tear strength of the first product sheet under the conditions in step (b) (the separation step). In some embodiments, the adhesive strength between the release polymer layers under the conditions in step (b) is no more than 90 percent of the Elmendorf tear strength of the first product sheet, or no more than 80 percent or no more than 70 percent or no more than 60 percent or no more than 50 percent. In some embodiments, the adhesive strength between the release polymer layers is at least 0.01 percent of the Elmendorf tear strength of the first product sheet.

In some embodiments, the adhesive strength between the release polymer layers under the conditions in step (b) is lower than the tear strength of the second product sheet. In some embodiments, the adhesive strength between the release polymer layers under the conditions in step (b) is no more than 90 percent of the Elmendorf tear strength of the second product sheet, or no more than 80 percent or no more than 70 percent or no more than 60 percent or no more than 50 percent. In some embodiments, the adhesive strength between the release polymer layers is at least 0.01 percent of the Elmendorf tear strength of the second product sheet.

In some embodiments, the adhesion between the release polymer layers under the conditions in step (b) is no more than 2.0 N/15 mm or no more than 1.5 N/15 mm or no more than 1.0 N/15 mm or no more than 0.8 N/15 mm or no more than 0.5 N/15 mm or no more than 0.3 N/15 mm or no more than 0.1 N/15 mm. There is no minimum desired adhesion between the films, but in some cases adhesion less than 0.001 N/15 mm is unnecessary.

The first release polymer layer of the laminate will become the outer layer of a coating on the first substrate, and so it is selected to give properties desired for this coating.

In some embodiments, the first release polymer layer comprises polyolefin. Polyolefin coatings give a paper or fabric substrate improved resistance to moisture and grease, give the ability to form heat-seals and give a printable surface. Polyolefin coatings give a metal substrate the ability to form heat-seals and give a printable surface.

In some embodiments, the second release polymer layer comprises a barrier polymer or an ionomer.

In some embodiments, the first release polymer layer comprises a barrier polymer such as PET, PVDC, polyamide or EVOH. Barrier coatings form a barrier to prevent transport of air, flavors and/or water through the paper substrate. In some embodiments, the second release polymer layer comprises a polyolefin.

In some embodiments, the first release polymer layer comprises an EVA polymer or an ionomer. EVA and ionomers give the ability to form heat-seals and give a printable surface. In addition, ionomers can add toughness and abrasion resistance. In some embodiments, the second release polymer layer comprises a polyolefin.

The release polymer layers may be any thickness desired that can be consistently extruded and drawn in the extrusion coating process. In some embodiments, it may be desirable to minimize thickness of the first release polymer layer in order to reduce polymer content of the first product sheet. This may be especially desirable when the first release polymer layer is adhered directly to the first substrate. In some embodiments, it may be desirable to minimize thickness of the second release polymer layer in order to reduce polymer content of the second product sheet. This may be especially desirable when the second release polymer layer is adhered directly to a second substrate.

In some embodiments, one or both release polymer layers in the laminate and the product sheets are no more than 20 microns thick or no more than 15 microns thick or no more than 10 microns thick or no more than 8 microns thick or no more than 6 microns thick or no more than 4 microns thick. In some embodiments, one or both release polymer layers are at least 1 microns thick or at least 2 microns thick or at least 3 microns thick or at least 4 microns thick or at least 5 microns thick.

### Supplemental Layers

In some embodiments, the laminate and resulting product sheets contain no supplemental layers. The first release polymer layer is adhered directly to the first substrate. The second release polymer is either adhered directly to a second substrate or is not adhered to any other polymer layer.

In some embodiments, one or more supplemental polymer layers lie between the first release polymer layer and the first substrate. In some embodiments, one or more supplemental polymer layers are adhered to the second release polymer layer either with or without a second substrate.

Supplemental polymer layers may be selected to improve one or more properties of the product sheets over the properties provided by the substrate and the release polymer layers. For example, supplemental polymer layers may include barrier polymer layers to prevent transport of air, flavors and/or water through the product sheet. Supplemental polymer layers may include polyolefin layers to prevent flow of moisture or grease though the product sheet. Supplemental polymer layers may also provide mechanical strength to a product sheet, such higher tensile strength, tear resistance or abrasion resistance.

In some embodiments, one or more supplemental polymer layers are tie layers. Tie layers adhere incompatible layers of a laminate together, such as adhering a polymer layer to the substrate or adhering one polymer layer to another. Examples of tie layers that bind polyolefin layers to non-polyolefin polymer layers include polyolefins that have been functionalized with pendant polar moieties, such as pendant acid or anhydride moieties. For example, copolymers of ethylene with maleic acid and optionally acrylate monomers are sometimes used as tie layers. Suitable tie layer polymers are known and commercially available, such as under the AMPLIFY^{™} and BYNEL^{™} trademarks. In some embodiments, the tie layer comprises a polymer blend, such as a blend of polyolefin and a functionalized polyolefin.

In some embodiments, supplemental layers may comprise a barrier layer and a tie layer to adhere the barrier layer to a polyolefin release polymer layer. For example, the laminate may comprise in order: a first substrate/a tie layer/ a barrier polymer layer/a tie layer/a first release polymer layer comprising polyolefin/a second release polymer layer comprising a non-polyolefin polymer. As a second example, the laminate may comprise in order: the first substrate / polyolefin first release polymer layer /a barrier polymer as a non-polyolefin second release polymer layer/a tie layer/a polyolefin supplemental layer. As a third example, the laminate may comprise in order: the first substrate / a non-polyolefin first release polymer layer /a polyolefin second release polymer layer/a tie layer/ a barrier polymer layer/a tie layer/a polyolefin layer.

Supplemental layers may be any thickness that provides suitable properties to the product sheets. In some embodiments, barrier layers are on average at least 1 micron thick or at least 3 microns or at least 5 microns or at least 8 microns or at least 10 microns or at least 12 microns. In some embodiments, barrier layers are on average at most 30 microns thick or at most 25 microns or at most 20 microns or at most 15 microns or at most 10 microns or at most 8 microns. In some embodiments, tie layers are on average at least 1 micron thick or at least 2 microns or at least 3 microns or at least 4 microns or at least 5 microns. In some embodiments, tie layers are on average at most 15 microns thick or at most 10 microns or at most 8 microns or at most 5 microns. In some embodiments, polyolefin layers are on average at least 5 microns thick or at least 8 microns or at least 10 microns or at least 20 microns or at least 30 microns or at least 40 microns or at least 50 microns. In some embodiments, polyolefin layers are on average at most 80 microns thick or at most 60 microns or at most 50 microns or at most 40 microns or at most 30 microns or at most 20 microns or at most 10 microns.

### Extrusion Coating Process

The laminate can be made by an extrusion coating process.

In the extrusion coating process, a molten multilayer source film is extruded through a linear die such as a slit die or a coat hanger die. The layers of the source film reflect the release polymer layers and supplemental layers intended for the laminate.

In some embodiments, the multilayer source film is drawn across an air gap. In some embodiments, the length of the air gap is selected so that the source film contacts the substrate(s) at a good temperature to adhere well to the substrate(s). The best air gap varies depending on many factors, such as the polymers in the source film, the temperature of the source film at extrusion, the thickness of the source film and the draw rate of the source film.

In some embodiments, the draw rate across the air gap is higher than the extrusion rate of the source film, so that the source film thins and becomes uniaxially oriented. The ratio of the die gap at which the source film is extruded, in microns, divided by the average thickness of the resulting coating, in microns, is called the draw-down ratio. Draw-down ratio is affected by the ratio between the speed at which the source film is extruded and the speed that the substrate travels. Drawing down the source film thins the layers of the source film, so that release polymer layers and supplemental layers in the laminate and the product sheets may be substantially thinner than in the originally-extruded source film.

After the air gap and while the source film is still molten, a face of the source film that is closest to the first release polymer layer is contacted with the first substrate to form a laminate.

Optionally, the opposite face of the source film is contacted with a second substrate. The resulting laminate contains the source film sandwiched between the first and second substrates.

The laminate, containing the source film and the substrate(s), is pressed together and cooled so that the substrate(s) adhere to the face(s) of the source film that they are in contact with. In some embodiments, the pressure is applied by passing the laminate between two rollers that press the layers together.

In some embodiments, one roller is a chill roller. The chill roller is maintained at a temperature that cools the molten polymers in the laminate and solidifies them. In some embodiments, the chill roller is maintained at a temperature of no more than 80°C or no more than 70°C or no more than 60°C or no more than 50°C or no more than 40°C or no more than 30°C. In some embodiments, the chill roller is maintained at a temperature of at least 0°C or at least 10°C or at least 20°C.

In some embodiments, one roller is a pressure roller. The pressure roller maintains constant pressure on the laminate against the chill roller or against another roller to provide a uniformly thick laminate. The best pressures vary based on many factors such as the polymers in the laminate, the temperature of the laminate, the thickness of the source film and the stiffness of the substrates.

Optionally, the edges of the laminate may be trimmed. It is difficult to maintain a consistent extrusion coating on a substrate all the way to the edge of the substrate. In many cases, it is more economical to allow the edges of the substrate to have an inconsistent coating, and then trim off the inconsistent edges.

Equipment to perform the extrusion coating and make the laminate is commercially available with instructions for its use.

### Separating the Laminate to make Product Sheets

The laminate is separated at the interface between the release polymer layers to make a first product sheet that comprises the first substrate, the first release polymer layer, and any supplemental layers that were between the first substrate and the first release polymer layer in the laminate. In some embodiments, a second product sheet is also recovered that comprises the second release polymer layer and any other layers that were adhered to the second release polymer layer in laminate.

In some embodiments, the separation is accomplished by mechanical separation, such as by peeling. For example, each outer surface layer of the laminate may be adhered to one of two opposing drums, which turn and peel the laminate apart. In some embodiments, the film is heated before peeling to make peeling easier.

The process may be understood more clearly by reference to the Drawings.

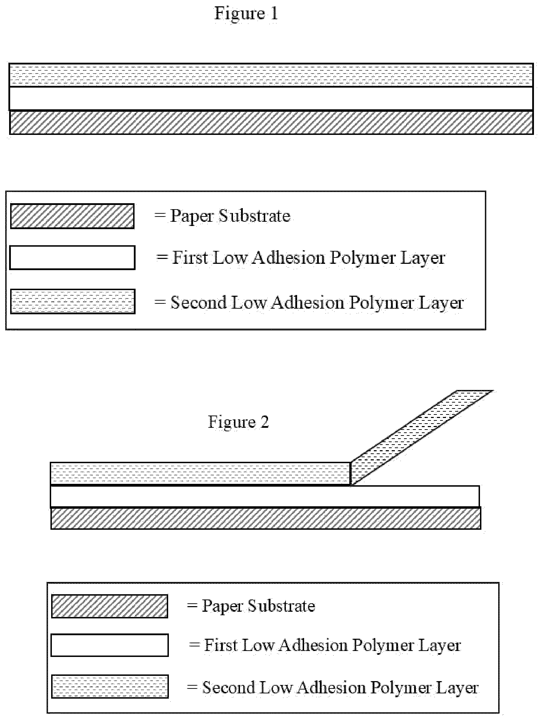

Figure 1 illustrates a three-layer laminate that comprises (i) a paper substrate, (ii) a first release polymer layer adhered directly to the substrate, and (iii) a second release polymer layer directly in contact with the first release polymer layer.
Figure 2 illustrates the separation of the three-layer laminate in Figure 1. The first product sheet comprises the paper substrate adhered directly to the first release polymer layer. The second product sheet comprises the second release polymer layer as a monolayer film.

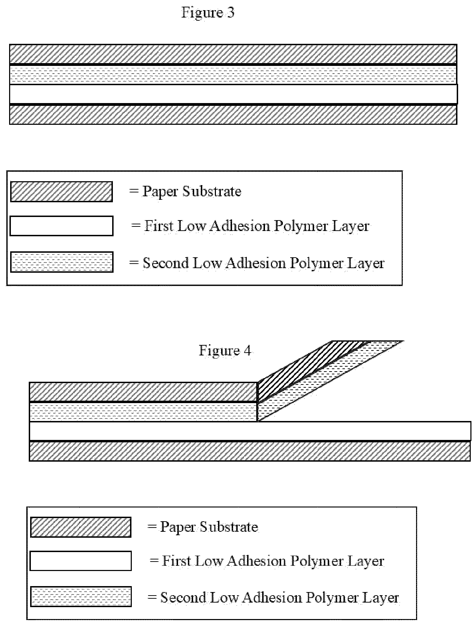

Figure 3 illustrates a four-layer laminate that comprises (i) a first paper substrate, (ii) a first release polymer layer adhered directly to the first substrate, (iii) a second release polymer layer directly in contact with the first release polymer layer, and (iv) a second paper substrate adhered directly to the second release polymer layer.
Figure 4 illustrates the separation of the four-layer laminate in Figure 3. The first product sheet comprises the first paper substrate adhered directly to the first release polymer layer. The second product sheet comprises the second paper substrate adhered directly to the second release polymer layer.

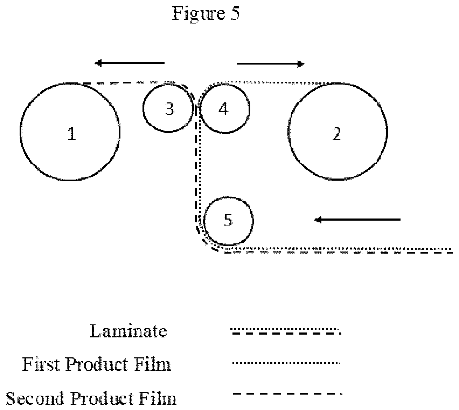

Figure 5 illustrates an embodiment of separation step (b). The first and second product sheets are attached the rollers 1 and 2. Rollers 1 and 2 draw the product sheets forward. The first and second product films originate as a laminate that is drawn forward by the product films as they are taken up on the rollers. The laminate passes roller 5 and is drawn between rollers 3 and 4. As the laminate leaves rollers 3 and 4, it is peeled apart to form the first and second product sheets. The first and second product sheets are taken up on rollers 1 and 2.

The product sheets are recovered for use or are directly used. In some embodiments the product sheets are stored, such as by winding on a roller, drum or core or cutting into sheets and stacking. In some embodiments, the product sheets may be further treated, such as by orienting, laminating, metallizing, printing, cross-linking or irradiating. In some embodiments, the recovered product sheets have a length in the machine direction of at least 10 meters or at least 25 meters or at least 50 meters or at least 100 meters.

The product sheets that contain substrates may be used for ordinary purposes of polymer-coated products. The product sheets that do not contain substrates may be used for ordinary purposes of polymer films such as packaging and wraps.

Some examples of laminates and their resulting products include the following:

| Laminate | first substrate/ionomer release polymer layer /polyethylene release polymer layer |
|---|---|
| First Product Sheet | first substrate/ionomer release polymer layer as a coating |
| Second Product Sheet | polyethylene release polymer layer as a monolayer film |

| Laminate | first substrate/polyethylene release polymer layer/ionomer release polymer layer/ |
|---|---|
| First Product Sheet | first substrate/polyethylene release polymer layer as a coating |
| Second Product Sheet | ionomer release polymer layer as a monolayer film |

| Laminate | first substrate/ionomer release polymer layer/polyethylene release polymer layer/second substrate |
|---|---|
| First Product Sheet | first substrate/ionomer release polymer layer as a coating |
| Second Product Sheet | second substrate/polyethylene release polymer layer as a coating |

| Laminate | first substrate/tie layer/barrier layer/tie layer/polyethylene release polymer layer/ionomer layer/second substrate |
|---|---|
| First Product Sheet | first substrate/tie layer/barrier layer/tie layer/polyethylene release polymer layer as a coating |
| Second Product Sheet | second substrate/ionomer layer as a coating. |

| Laminate | first substrate/ionomer release polymer layer/polyethylene release polymer layer/ tie layer/barrier layer/tie layer/ polyethylene layer |
|---|---|
| First Product Sheet | first substrate/ionomer release polymer layer as a coating |
| Second Product Sheet | multi-layer film comprising polyethylene release polymer layer/ tie layer/barrier layer/tie layer/ polyethylene layer |

| Laminate | first substrate/polyethylene release polymer layer/ ionomer release polymer layer/ tie layer/barrier layer/tie layer/ polyethylene layer |
|---|---|
| First Product Sheet | first substrate/polyethylene release polymer layer as a coating |
| Second Product Sheet | multi-layer film comprising ionomer release polymer layer/ tie layer/barrier layer/tie layer/ polyethylene layer |

| Laminate | first substrate/tie layer/PET release polymer layer/polyethylene release polymer layer |
|---|---|
| First Product Sheet | first substrate/tie layer/PET release polymer layer as a coating |
| Second Product Sheet | polyethylene release polymer layer as a monolayer film |

| Laminate | first substrate/polyethylene release polymer layer/PET release polymer layer |
|---|---|
| First Product Sheet | first substrate/polyethylene release polymer layer as a coating |
| Second Product Sheet | PET release polymer layer as a monolayer film |

| Laminate | first substrate/tie layer/PVDC release polymer layer/polyethylene release polymer layer |
|---|---|
| First Product Sheet | first substrate/tie layer/PVDC release polymer layer as a coating |
| Second Product Sheet | polyethylene release polymer layer as a monolayer film |

| Laminate | first substrate/polyethylene release polymer layer/PVDC release polymer layer |
|---|---|
| First Product Sheet | first substrate with polyethylene release polymer layer as a coating |
| Second Product Sheet | PVDC release polymer layer as a monolayer film |

### Illustrative Embodiments:

The following illustrative embodiments illustrate some aspects of the invention.
Aspect 1. A process to make a polymer-coated substrate comprising the steps of:
   (a) forming a laminate that comprises:
      (i) a first substrate
      (ii) a first release polymer layer adhered directly or indirectly to the first substrate;
      (iii) a second release polymer layer directly in contact with the first release polymer layer; and
      (iv) optionally a second substrate adhered directly or indirectly to the second release polymer layer; and
   (b) separating the laminate at the interface between the first and second release polymer layers, such that the first release polymer layer remains adhered directly or indirectly to the first substrate and the second release polymer layer is removed.
Aspect 2. The process of Aspect 1 wherein the adhesion strength between the release polymer layers in the source film is no more than 2 N/15 mm, under the conditions in step (b).
Aspect 3. The process of Aspect 1 wherein the adhesion strength between the release polymer layers in the source film is no more than 0.8 N/15 mm, under the conditions in step (b).
Aspect 4. The process of Aspect 1 wherein, in the source film, one release polymer layer comprises polyethylene, and one release polymer layer comprises polypropylene homopolymer or random copolymer.
Aspect 5. The process of Aspect 1 wherein, in the source film, one release polymer layer comprises polyolefin, and one release polymer layer comprises a polymer having regular dipolar moieties selected from the group of hydroxyl, halide, acid, ester, amine or amide moieties.
Aspect 6. The process of Aspect 1 wherein, in the source film, one release polymer layer comprises polyolefin, and one release polymer layer comprises a non-polyolefin polymer selected from ethylene vinyl alcohol copolymer, polyamide or polycarbonate.
Aspect 7. The process of Aspect 1 wherein, in the source film, one release polymer layer comprises polyolefin, and one release polymer layer comprises an ionomer.
Aspect 8. The process of Aspect 1 wherein the substrate comprises paper.
Aspect 9. The process of Aspect 1 wherein in the laminate the substrate comprises metal.
Aspect 10. The process of Aspect 1 wherein the substrate comprises a polymer sheet.
Aspect 11. The process of any one of Aspects 1 to 10 wherein the laminate is formed by (a) extruding a multilayer polymer source film; (b) contacting one face of the source film with the first substrate to form a laminate; (c) optionally contacting the opposite face of the source film with a second substrate; and (d) cooling and pressing together the multilayer polymer film and the substrate(s).
Aspect 12. The process of Aspect 11 wherein a second substrate is adhered directly or indirectly to the second release polymer layer.
Aspect 13. The process of Aspect 11 wherein either the first or second release polymer layer has a thickness from 1 micron to 200 microns.
Aspect 14. The process of Aspect 12 wherein in the laminate a release polymer layer adheres directly to a substrate.
Aspect 15. The process of Aspect 12 wherein the laminate comprises at least one supplemental polymer layer between a release polymer layer and a substrate adhered to the release polymer layer.

### Test Methods

Unless stated otherwise, measurements listed in this application are made using the following test methods:

| Parameter | Test |
|---|---|
| Peel strength | T Peel Test according to ASTM D903- Standard Test Method for Peel or Stripping Strength of Adhesive Bonds |
| Thickness | ASTM F2251-standard method to determine the thickness of flexible packaging materials. |
| Elmendorf Tear | ASTM D1922 - Standard Test Method for Propagation Tear Resistance of Plastic Film and Thin Sheeting by Pendulum Method |

### Examples

The following examples illustrate specific embodiments of the invention, but do not limit the broadest scope of the invention.

Example 1: A two layer polymer film, comprising a layer of DOW^{™} LDPE PG 7008 low density polyethylene resin and a layer of SURLYN^{™} 1605 ionomer is extruded and laminated onto a substrate of 60 gsm paper, using Collin Lab Line cast film extrusion equipment. The extrusion is carried out at a temperature of 250°C to 260°C for the ionomer. The rate of extrusion is sufficient to coat the paper with 15 gsm layer of the LDPE, which is adhered directly to the paper, and a 60 micron layer of the ionomer adhered to the LDPE. The air gap from the extrusion die to the paper is 40 mm. The chill roll is maintained at 35°C.

After cooling, the ionomer layer is peeled from the LDPE layer by hand. The layers separate easily to yield a paper coated with the LDPE resin at a thickness of 15 gsm, and a separate ionomer film with a thickness of 60 microns.

## Claims

1. A process to make a polymer-coated substrate comprising the steps of:
(a) forming a laminate that comprises:
(i) a first substrate
(ii) a first release polymer layer adhered directly or indirectly to the first substrate;
(iii) a second release polymer layer directly in contact with the first release polymer layer; and
(iv) optionally a second substrate adhered directly or indirectly to the second release polymer layer; and
(b) separating the laminate at the interface between the first and second release polymer layers, such that the first release polymer layer remains adhered directly or indirectly to the first substrate and the second release polymer layer is removed.

2. The process of Claim 1 wherein the adhesion strength between the release polymer layers in the source film is no more than 2 N/15 mm, under the conditions in step (b).

3. The process of Claim 1 wherein the adhesion strength between the release polymer layers in the source film is no more than 0.8 N/15 mm, under the conditions in step (b).

4. The process of Claim 1 wherein, in the source film, one release polymer layer comprises polyolefin, and one release polymer layer comprises a polymer having regular dipolar moieties selected from the group of hydroxyl, halide, acid, ester, amine or amide moieties.

5. The process of Claim 1 wherein, in the source film, one release polymer layer comprises polyolefin, and one release polymer layer comprises a non-polyolefin polymer selected from ethylene vinyl alcohol copolymer, polyamide or polycarbonate.

6. The process of Claim 1 wherein, in the source film, one release polymer layer comprises polyolefin, and one release polymer layer comprises an ionomer.

7. The process of Claim 1 wherein the substrate comprises paper.

8. The process of Claim 1 wherein in substrate comprises metal.

9. The process of Claim 1 wherein the substrate comprises a polymer sheet.

10. The process of any one of Claims 1 to 9 wherein the laminate is formed by (a) extruding a multilayer polymer source film; (b) contacting one face of the source film with the first substrate to form a laminate; (c) optionally contacting the opposite face of the source film with a second substrate; and (d) cooling and pressing together the multilayer polymer film and the substrate(s).

11. The process of Claim 10 wherein a second substrate is adhered directly or indirectly to the second release polymer layer.

12. The process of Claim 10 wherein either the first or second release polymer layer or both have a thickness from 1 micron to 200 microns.

13. The process of Claim 12 wherein either the first or second release polymer layer or both are on average no more than 10 microns thick.

14. The process of Claim 10 wherein, in the laminate, a release polymer layer adheres directly to a substrate.

15. The process of Claim 10 wherein the laminate comprises at least one supplemental polymer layer between a release polymer layer and a substrate adhered to the release polymer layer.
